# FASCICULE DE BREVET EUROPEEN

(11) **EP 3 931 456 B1**
(45) Date de publication et mention de la délivrance du brevet: **15.06.2022**
(21) Numéro de dépôt: 21701801.9
(22) Date de dépôt: 29.01.2021
(51) Int. Cl.: F16C 19/52, F16C 41/00

(54) **PALIER INSTRUMENTE INTEGRANT UN COLLECTEUR DE COURANT DE FUITE ET UN BLINDAGE MAGNETIQUE**
INSTRUMENTIERTES LAGER MIT LECKSTROMKOLLEKTOR UND MAGNETISCHER ABSCHIRMUNG
INSTRUMENTED BEARING INCORPORATING A LEAKAGE CURRENT COLLECTOR AND A MAGNETIC SHIELD

(30) Priorité: 30.01.2020 FR 2000940
(43) Date de publication de la demande: 05.01.2022
(73) Titulaire: NTN-SNR ROULEMENTS, 74000 Annecy (FR)
(72) Inventeur: VANDAMME, Etienne, 74540 ALLEVES (FR)
(74) Mandataire: Alatis
(86) Numéro de dépôt international: PCT/EP2021/052095
(87) Numéro de publication internationale: WO 2021/152082

(56) Documents cités:
- EP-A1- 1 335 059
- DE-A1- 19 910 130
- DE-A1-102015 223 509
- DE-A1-102018 117 315
- DE-U1- 20 011 138

## Description

### DOMAINE TECHNIQUE DE L'INVENTION

L'invention se rapporte à un palier instrumenté destiné à guider en rotation un équipage mobile par rapport à un support, l'équipage mobile devant être relié électriquement au support.

### ETAT DE LA TECHNIQUE ANTERIEURE

Les moteurs de véhicules électriques/hybrides sont sujets à des défaillances dues à passage de courant dans les paliers à roulement qui les équipent. Ces courants de fuite peuvent également affecter les mesures ou entraîner des défaillances des capteurs dont peuvent être équipés ces paliers.

Il existe des systèmes de retour de courant par balais graphite, ou mieux, fibre de carbone, comme décrit par exemple dans le document EP 1 872 463, prétendus inusables et sans maintenance. Il s'agit cependant d'un composant non intégré à ajouter au moteur, qui nécessite une opération de montage supplémentaire, et contribue à encombrement axial supplémentaire.

Dans le document DE 199 10 130 A1 est décrit un dispositif de mesure d'impulsions destiné à être fixé sur un arbre tournant pour en déterminer la vitesse de révolution, qui intègre une liaison électrique de retour de courants de fuite. Ce capteur d'impulsion comporte une bague extérieure fixe, formant une piste de guidage annulaire, une bague intérieure formant une piste de guidage annulaire située en regard de la piste de guidage de la bague extérieure, la bague intérieure étant mobile par rapport à la bague extérieure autour d'un axe de révolution qui est un axe de symétrie de révolution de la piste de guidage de la bague extérieure et de la piste de guidage de la bague intérieure, un codeur annulaire solidaire de la bague intérieure, un ensemble capteur solidaire de la bague extérieure, l'ensemble capteur comportant une tête de lecture positionnée en regard et à une distance de lecture du codeur annulaire, et un collecteur de courant de fuite, apte à venir en contact glissant avec un contact annulaire solidarisé indirectement avec la bague intérieure. Un tel dispositif présente toutefois un encombrement axial important, et ne permet pas une protection du capteur contre les perturbations électromagnétiques environnantes.

Dans le document EP 1 335 059, qui divulgue les caractéristiques du préambule de la revendication 1, il a été proposé d'équiper une machine à tambour d'un palier à roulement instrumenté comportant une liaison électrique entre des éléments conducteurs associés respectivement au tambour et au bâti de la machine. La liaison électrique comprend une lame conductrice solidaire par une extrémité d'une partie fixe de l'ensemble capteur associé à la machine, et venant frotter par son autre extrémité sur une partie tournante du palier à roulement instrumenté. Cette liaison électrique est disposée soit entre le bloc capteur et une roue codeuse conductrice, soit entre le bloc capteur et une bague tournante du palier à roulement. On gagne ici en compacité axiale, mais le capteur reste sensible aux perturbations électromagnétiques environnantes.

### EXPOSE DE L'INVENTION

L'invention vise à remédier aux inconvénients de l'état de la technique et à proposer un palier instrumenté à retour de courant de fuite intégré, qui soit moins sensible aux perturbations électromagnétiques, telles qu'on peut les rencontrer, notamment, dans l'environnement des moteurs électriques de propulsion des véhicules routiers électriques ou hybrides.

Pour ce faire est proposé, selon un premier aspect de l'invention, un palier instrumenté, comportant :
- une bague extérieure fixe, formant au moins une piste de guidage annulaire,
- une bague intérieure formant au moins une piste de guidage annulaire située en regard de la piste de guidage de la bague extérieure, la bague intérieure étant mobile en rotation par rapport à la bague extérieure autour d'un axe de révolution qui est un axe de symétrie de révolution de la piste de guidage de la bague extérieure et de la piste de guidage de la bague intérieure,
- un codeur annulaire solidaire de la bague intérieure,
- un ensemble capteur solidaire de la bague extérieure, l'ensemble capteur comportant une tête de lecture positionnée en regard et à une distance de lecture du codeur, et
- un collecteur de courant de fuite, apte à venir en contact glissant avec un contact annulaire apte à être solidarisé directement ou indirectement avec la bague intérieure, et
- une liaison électrique conductrice entre le collecteur de courant de fuite et la bague extérieure fixe.

Selon l'invention, le codeur et la tête de lecture sont positionnés axialement entre la bague extérieure et le collecteur de courant de fuite, et la liaison électrique conductrice constitue un blindage magnétique en un matériau ferromagnétique, s'étendant depuis la bague extérieure jusqu'au collecteur de courant de fuite en entourant le codeur et la tête de lecture.

On intègre ainsi à un palier instrumenté combinant les fonctions de guidage en rotation et de lecture d'un codeur, des fonctions supplémentaires de retour de courant, notamment pour la mise à la terre de l'équipage tournant guidé par le palier, et de blindage magnétique de la tête de lecture, le retour de courant pouvant contribuer en outre le cas échéant à un blindage électromagnétique haute fréquence de la tête de lecture.

Le palier peut être un palier lisse, ou, de préférence, un palier à roulement, comportant des corps roulants circulant sur les pistes de guidage.

Le codeur peut comporter une ou plusieurs pistes multipolaires. Il s'agit de préférence d'un codeur magnétique. Un tel codeur comporte une ou plusieurs pistes, chacune constituée d'une alternance de pôles magnétiques nord et sud, qui peut être régulière ou non. Alternativement, le codeur peut être une roue phonique. La tête de lecture comporte un ou plusieurs éléments sensibles aux variations de champ magnétiques produites par le codeur.

La tête de lecture peut faire face au codeur en direction axiale, auquel cas le codeur se trouve de préférence entre la tête de lecture et la bague intérieure du palier. Alternativement, la tête de lecture peut faire face au codeur en direction radiale, auquel cas la tête de lecture de trouve de préférence radialement à l'extérieur du codeur.

Suivant un mode de réalisation, le collecteur de courant de fuite comporte un balai frottant contre le contact annulaire. Il peut s'agir du balai en graphite ou en fibres de carbone, pour une longévité maximale.

Suivant un mode de réalisation, on prévoit qu'au repos, le collecteur de courant de fuite est en contact avec le contact annulaire sur un secteur angulaire supérieur à 270°. De préférence, on prévoit qu'au repos, qu'au repos, le collecteur de courant de fuite est en contact annulaire avec le contact annulaire. Le collecteur de courant de fuite contribue ainsi au blindage électromagnétique haute fréquence de la tête de lecture.

Suivant un mode de réalisation, le contact annulaire est formé par une douille annulaire qui présente une ou plusieurs des caractéristiques suivantes :
- la douille s'étend en direction axiale de manière à être axialement en chevauchement avec une face du codeur qui fait face à la tête de lecture ;
- la douille s'étend en direction axiale de manière à être axialement en chevauchement avec la tête de lecture ;
- la douille est en appui direct ou indirect contre la bague intérieure ;
- la douille est connectée électriquement à la bague intérieure ;
- la douille est connectée électriquement à l'arbre ;
- la douille comporte une surface de frottement cylindrique pour le collecteur de courant de fuite ;
- la douille comporte une collerette faisant saillie radialement vers l'extérieur, le collecteur de courant de fuite étant positionné axialement entre la collerette et la tête de lecture.

La collerette contribue au guidage des lignes du champ magnétique en réduisant la distance entre le blindage magnétique et l'équipage tournant guidé par le palier.

La douille peut avantageusement être réalisée en matériau ferromagnétique tel que du fer doux, de l'acier, notamment un acier inoxydable ferritique ou martensitique, ou en mu-métal.

Suivant divers modes de réalisation, on prévoit que le blindage magnétique présente une ou plusieurs des caractéristiques suivantes :
- le blindage magnétique comporte au moins une tôle en matériau ferromagnétique et conducteur électrique ;
- le blindage magnétique comporte plusieurs tôles superposées en matériau ferromagnétique et conducteur électrique ;
- le blindage magnétique comporte une portion cylindrique recouvrant la tête de lecture ;
- le blindage magnétique comporte une portion d'extrémité s'étendant radialement depuis une extrémité de la portion cylindrique recouvrant la tête de lecture radialement vers l'intérieur et vers le collecteur de courant de fuite.

De façon connue, on renforce le blindage magnétique en empilant les tôles de manière à constituer un feuillard.

Suivant un mode de réalisation, une partie du collecteur de courant de fuite est pincée entre deux tôles du blindage magnétique. De préférence, une première des deux tôles se prolonge axialement pour constituer une portion cylindrique recouvrant la tête de lecture, la deuxième des deux tôles présentant de préférence une des caractéristiques suivantes :
- la deuxième des deux tôles ne s'étend pas axialement pour constituer une portion cylindrique recouvrant la tête de lecture ;
- la deuxième des deux tôles s'étend axialement pour constituer une portion cylindrique recouvrant la tête de lecture ;
- la deuxième des deux tôles est positionnée entre la première des deux tôles et la tête de lecture ;
- la première des deux tôles est positionnée entre la deuxième des deux tôles et la tête de lecture.

Pour un assemblage particulièrement simple, on prévoit le blindage magnétique est serti, fretté, collé, soudé sur la bague extérieure.

Suivant un mode de réalisation particulièrement avantageux, l'ensemble capteur est solidarisé à la bague extérieure par l'intermédiaire du blindage magnétique.

Suivant un mode de réalisation, le blindage magnétique comporte une ouverture pour le passage de conducteurs électriques entre la tête de lecture et un dispositif électrique de l'ensemble capteur, positionné à l'extérieur du blindage magnétique, l'une des caractéristiques suivantes étant de préférence réalisées :
- l'ouverture est positionnée dans une paroi cylindrique du blindage magnétique ;
- l'ouverture est positionnée dans une paroi transversale du blindage magnétique.

### BREVE DESCRIPTION DES FIGURES

D'autres caractéristiques et avantages de l'invention ressortiront à la lecture de la description qui suit, en référence aux figures annexées, qui illustrent :
[Fig. 1] la figure 1, un palier instrumenté selon un premier mode de réalisation de l'invention ;
[Fig. 2] la figure 2, un détail d'un palier instrumenté selon un deuxième mode de réalisation de l'invention ;
[Fig. 3] la figure 3, un détail d'un palier instrumenté selon un troisième mode de réalisation de l'invention ;
[Fig. 4] la figure 4, un détail d'un palier instrumenté selon un quatrième mode de réalisation de l'invention ;
[Fig. 5] la figure 5, un détail d'un palier instrumenté selon un cinquième mode de réalisation de l'invention ;
[Fig. 6] la figure 6, un détail d'un palier instrumenté selon un sixième mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE REALISATION

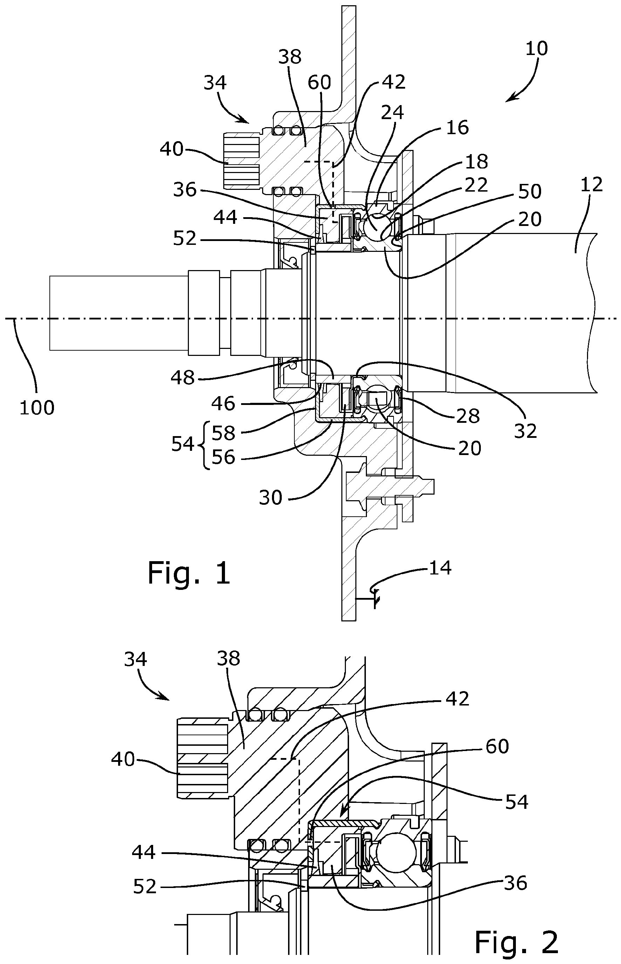

Sur la figure **1** est illustré un palier instrumenté **10** monté sur un arbre **12** tournant par rapport à une structure fixe **14.** Le palier **10** est un palier à roulement, comportant une bague extérieure fixe **16,** formant une piste de guidage annulaire **18,** une bague intérieure **20** formant une piste de guidage annulaire **22** située en regard de la piste de guidage **18** de la bague extérieure **16,** des corps roulants **24** circulant sur les pistes de guidage **18, 22,** le cas échéant une cage **26** de maintien des corps roulants, et le cas échéant des joints d'étanchéité **28** pour protéger les corps roulants **24** et les pistes de guidage **18, 22** des agressions extérieures mécaniques ou chimiques, ou alors pour confiner la lubrification dans la zone de roulement, ou encore pour assurer ces deux fonctions simultanément. De façon connue, la bague intérieure **20,** frettée sur l'arbre **12,** est mobile en rotation par rapport à la bague extérieure **16** autour d'un axe de révolution **100** qui est un axe de symétrie de révolution de la piste de guidage **18** de la bague extérieure **16** et de la piste de guidage **22** de la bague intérieure **20.**

Un codeur annulaire **30** est solidarisé à la bague intérieure **20** par tout moyen approprié, par exemple par l'intermédiaire d'un porte codeur **32** serti ou fretté sur un périmètre intérieur de la bague intérieure **20.**

Un ensemble capteur **34** est solidarisé à la bague extérieure **16.** Cet ensemble capteur **34** comporte une tête de lecture **36** positionnée axialement en regard et à une distance de lecture du codeur annulaire **30,** un corps de capteur **38** en matériau isolant et amagnétique qui supporte un dispositif électrique **40** qui peut être par exemple un connecteur électrique, un câble électrique, un presse-étoupe ou le cas échéant une carte électronique de traitement du signal, et une liaison électrique filaire **42** entre la tête de lecture **36** et le dispositif électrique **40.** Dans ce mode de réalisation, le codeur **30** se trouve entre les bagues **16, 20** du palier **10** et la tête de lecture **36.**

Le palier instrumenté **10** comporte également un collecteur de courant de fuite **44** solidaire de l'ensemble capteur **34,** et constitué ici d'un balai annulaire entourant complètement l'arbre **12** et venant radialement en contact glissant contre une surface de frottement cylindrique **46** d'une douille métallique annulaire **48** directement frettée sur l'arbre **12.** Le codeur **30** et la tête de lecture **36** sont positionnées axialement entre la bague extérieure **16** et le collecteur de courant de fuite **44.**

De manière préférentielle, la douille **48** s'étend en direction axiale sous la tête de lecture **36,** et le cas échéant sous le codeur **30,** de manière à être axialement en chevauchement avec au moins la tête de lecture **36,** et de préférence avec une face du codeur **30** qui fait face à la tête de lecture **36.**

Le porte codeur **32** est pincé entre la douille **48** et la bague intérieure **20.** Le montage est arrêté axialement par un épaulement **50** de l'arbre **12** et par un anneau élastique **52.** Le porte codeur est métallique en matériau ferromagnétique de sorte à constituer une liaison électrique entre la bague intérieure du palier et la douille, et à guider les lignes de champ autour du codeur **30,.**

Une liaison électrique conductrice **54** entre le collecteur de courant de fuite **44** et la bague extérieure **16** du palier **10** est constituée par une tôle annulaire en matériau conducteur de l'électricité, qui s'étend depuis la bague extérieure **16** jusqu'au collecteur de courant de fuite **44** en entourant le codeur **30** et la tête de lecture **36.** On établit ainsi un chemin électrique entre l'arbre **12** et la liaison électrique conductrice **54,** qui chemine par la douille **48** frettée sur l'arbre **12** et le collecteur de courant de fuite **44** en contournant la bague intérieure **20** et bague extérieure **16** du palier **10,** ainsi que les pistes de guidage **18, 22** et les corps roulants **24.**

Plus spécifiquement, cette liaison électrique comporte une portion cylindrique **56** recouvrant la tête de lecture **36** et une portion annulaire plane **58** s'étendant depuis une extrémité de la portion cylindrique **56** radialement vers l'intérieur et vers le collecteur de courant de fuite **44.** La fixation mécanique de la liaison électrique **54** à la bague extérieure **16** peut être obtenue notamment par sertissage, frettage, ou tout autre moyen préservant un contact électrique, par exemple par collage ou soudage, ou par des éléments de fixation.

Une ouverture **60** de petite dimension est formée dans la portion cylindrique **56** pour le passage des conducteurs électriques **42** entre la tête de lecture **36** et le dispositif électrique **40.**

Dans ce mode de réalisation, le corps de capteur en matériau isolant **38** de l'ensemble capteur **34** est surmoulé sur la tôle **54** qui présente ainsi une fonction mécanique de support de l'ensemble capteur **34** et de solidarisation de l'ensemble capteur **34** à la bague extérieure **16,** ainsi, le cas échéant qu'une fonction d'indexation angulaire du capteur par rapport à la structure fixe **14.** Le collecteur de courant de fuite **44** est pincé entre une paroi de la tôle **54** et la tête de lecture **36.**

De façon remarquable, la liaison électrique **54** entre le collecteur de courant de fuite **44** et la bague extérieure **16** est constituée en un matériau ferromagnétique, de façon à constituer un blindage magnétique autour de la tête de lecture **36** et du codeur **30.** Le cumul des fonctions mécaniques, électriques et magnétiques de cette pièce fera préférer des matériaux ferromagnétiques tels que le fer doux, l'acier, notamment un acier ferritique ou martensitique, ou le mu-métal. Préférentiellement, le matériau constitutif de la bague extérieure **16,** dont la fonction principale reste naturellement le guidage des corps roulants **24,** est également ferromagnétique, de manière à participer au guidage des lignes de champ magnétique autour de la tête de lecture **36,** ce qui fera préférer pour cette pièce un acier ayant les caractéristiques mécaniques requises par l'application, notamment au niveau des chemins de roulement.

Suivant un deuxième mode de réalisation, illustré sur la figure **2****,** l'ouverture **60** de passage des conducteurs **42** reliant la tête de lecture **36** au dispositif électrique **40** est formé dans la paroi d'extrémité plane **58** de la liaison électrique conductrice **54.**

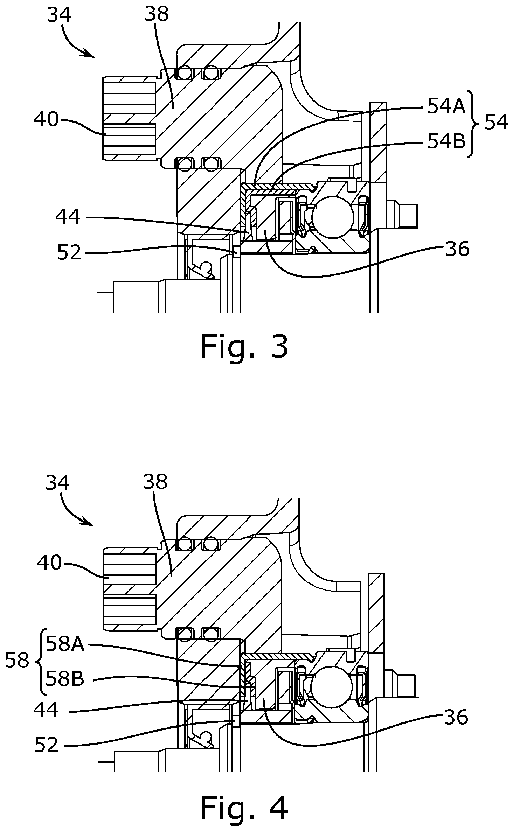

Suivant un troisième mode de réalisation, illustré sur la figure **3****,** la liaison électrique conductrice **54** est constituée par une pluralité de tôles, ici par deux tôles **54**A, **54**B, qui présentent toute deux une partie cylindrique entourant la tête de lecture et/ou le codeur pour améliorer les performances de blindage magnétique, et une partie d'extrémité servant à la fixation du collecteur de courant de fuite. En pratique, le collecteur de courant de fuite **44** est pincé entre les deux tôles **54**A, **54**B. Les deux tôles **54**A, **54**B peuvent être montées serrées, ou collées.

Suivant un quatrième mode de réalisation illustré sur la figure **4****,** seule la partie d'extrémité **58** de la liaison électrique conductrice **54** comporte deux tôles **58**A, **58**B, par exemple soudées l'une à l'autre, servant à pincer le collecteur de courant de fuite **44.**

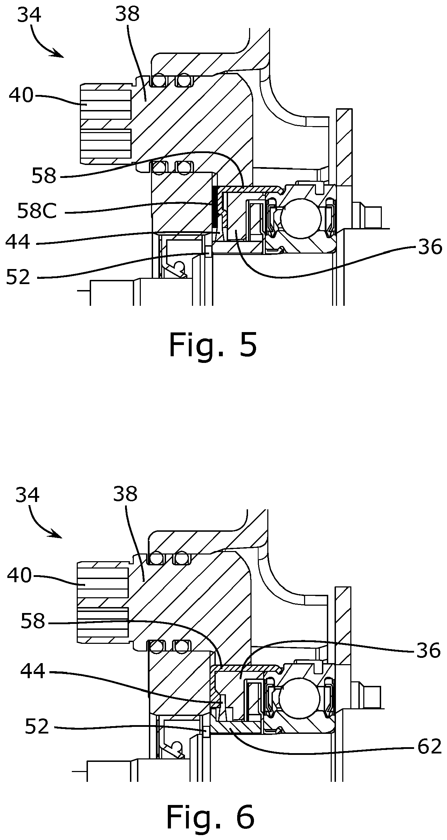

Suivant un cinquième mode de réalisation, illustré sur la figure **5****,** le collecteur de courant de fuite **44** est pincé entre la tôle **54** et une pièce rapportée **58**C, qui peut être une pièce métallique soudée à la portion d'extrémité **58** de la tôle **54** ou une rondelle isolante. Ce mode de réalisation apparaît particulièrement simple au montage, le collecteur de courant de fuite **44** étant monté par l'extérieur de la tôle **54.**

Suivant un sixième mode de réalisation, illustré sur la figure **6****,** la douille **48** comporte une collerette **62** faisant saillie radialement vers l'extérieur et vers la liaison électrique **54,** le collecteur de courant de fuite **44** étant positionné axialement entre la collerette **62** et la tête de lecture **36.** On améliore ainsi le blindage magnétique en guidant les lignes de champ magnétique jusqu'à l'arbre **12.** On améliore également la protection du collecteur de courant de fuite **44** contre la pollution extérieure (poussières, huile, eau).

Naturellement, les exemples représentés sur les figures et discutés cidessus ne sont donnés qu'à titre illustratif et non limitatif. Il est explicitement prévu que l'on puisse combiner entre eux les différents modes de réalisation illustrés pour en proposer d'autres.

L'invention est applicable à tout type de palier à roulement ou palier lisse.

La surface de contact **46** de la douille **48** avec le collecteur de courant de fuite **44** peut être orientée de diverses manières, par exemple perpendiculaire à l'axe de révolution ou conique. La surface de contact **46** peut le cas échéant être intégrée à l'arbre **12.**

## Revendications

1. Palier instrumenté (10), comportant :
- une bague extérieure (16) fixe, formant au moins une piste de guidage annulaire (18),
- une bague intérieure (20) formant au moins une piste de guidage annulaire (22) située en regard de la piste de guidage (18) de la bague extérieure, la bague intérieure étant mobile en rotation par rapport à la bague extérieure autour d'un axe de révolution qui est un axe de symétrie de révolution de la piste de guidage de la bague extérieure et de la piste de guidage (22) de la bague intérieure (20),
- un codeur annulaire (30) solidaire de la bague intérieure (20),
- un ensemble capteur (34) solidaire de la bague extérieure (16), l'ensemble capteur (34) comportant une tête de lecture (36) positionnée en regard et à une distance de lecture du codeur (30), et
- un collecteur de courant de fuite (44), apte à venir en contact glissant avec un contact annulaire (46) apte à être solidarisé directement ou indirectement avec la bague intérieure (20), et
- une liaison électrique conductrice (54) entre le collecteur de courant de fuite (44) et la bague extérieure fixe (16),
**caractérisé en ce que** le codeur (30) et la tête de lecture (36) sont positionnés axialement entre la bague extérieure (16) et le collecteur de courant de fuite (44), et la liaison électrique conductrice (54) constitue un blindage magnétique en un matériau ferromagnétique, s'étendant depuis la bague extérieure (16) jusqu'au collecteur de courant de fuite (44) en entourant le codeur (30) et la tête de lecture (36).

2. Palier instrumenté (10) selon la revendication 1, **caractérisé en ce que** le collecteur de courant de fuite (44) comporte un balai frottant contre le contact annulaire (46).

3. Palier instrumenté (10) selon l'une quelconque des revendications précédentes, **caractérisé en ce qu'**au repos, le collecteur de courant de fuite (44) est en contact avec le contact annulaire (46) sur un secteur angulaire supérieur à 270°.

4. Palier instrumenté (10) selon la revendication 3, **caractérisé en ce qu'**au repos, le collecteur de courant de fuite (44) est en contact annulaire avec le contact annulaire (46).

5. Palier instrumenté (10) selon l'une quelconque des revendications précédentes, **caractérisé en ce que** le contact annulaire (46) est formé par une douille annulaire (48) qui présente une ou plusieurs des caractéristiques suivantes :
- la douille (48) s'étend en direction axiale de manière à être axialement en chevauchement avec une face du codeur (30) qui fait face à la tête de lecture (36) ;
- la douille (48) s'étend en direction axiale de manière à être axialement en chevauchement avec la tête de lecture (36) ;
- la douille (48) est en appui direct ou indirect contre la bague intérieure (20) ;
- la douille (48) est connectée électriquement à la bague intérieure (20) ;
- la douille (48) est connectée électriquement à l'arbre (12) ;
- la douille (48) comporte une surface de frottement cylindrique (46) pour le collecteur de courant de fuite (44) ;
- la douille (48) comporte une collerette (62) faisant saillie radialement vers l'extérieur, le collecteur de courant de fuite (44) étant positionné axialement entre la collerette (62) et la tête de lecture (36).

6. Palier instrumenté (10) selon l'une quelconque des revendications précédentes, **caractérisé en ce que** le blindage magnétique (54) présente une ou plusieurs des caractéristiques suivantes :
- le blindage magnétique (54) comporte au moins une tôle (54, 54A, 54B) en matériau ferromagnétique et conducteur électrique ;
- le blindage magnétique (54) comporte plusieurs tôles superposées (54A, 54B) en matériau ferromagnétique et conducteur électrique ;
- le blindage magnétique (54) comporte une portion cylindrique (56) recouvrant la tête de lecture (36) ;
- le blindage magnétique (54) comporte une portion d'extrémité (58) s'étendant radialement depuis une extrémité de la portion cylindrique (56) recouvrant la tête de lecture (36) radialement vers l'intérieur et vers le collecteur de courant de fuite (44).

7. Palier instrumenté (10) selon l'une quelconque des revendications précédentes, **caractérisé en ce qu'**une partie du collecteur de courant de fuite (44) est pincée entre deux tôles (54A, 54B, 58A, 58B, 58C) du blindage magnétique (54).

8. Palier instrumenté selon la revendication 7, **caractérisé en ce qu'**une première (54A) des deux tôles se prolonge axialement pour constituer une portion cylindrique recouvrant la tête de lecture (36), la deuxième (54B, 58B, 58C) des deux tôles présentant de préférence une des caractéristiques suivantes :
- la deuxième (58B, 58C) des deux tôles ne s'étend pas axialement pour constituer une portion cylindrique recouvrant la tête de lecture (36) ;
- la deuxième (54B) des deux tôles s'étend axialement pour constituer une portion cylindrique recouvrant la tête de lecture (36) ;
- la deuxième (54B, 58B) des deux tôles est positionnée entre la première (54A) des deux tôles et la tête de lecture (36) ;
- la première (54A) des deux tôles est positionnée entre la deuxième (58C) des deux tôles et la tête de lecture (36).

9. Palier instrumenté (10) selon l'une quelconque des revendications précédentes, **caractérisé en ce que** le blindage magnétique (54) est serti, fretté, collé, soudé sur la bague extérieure.

10. Palier instrumenté (10) selon l'une quelconque des revendications précédentes, **caractérisé en ce que** l'ensemble capteur (34) est solidarisé à la bague extérieure (16) par l'intermédiaire du blindage magnétique (54).

11. Palier instrumenté (10) selon l'une quelconque des revendications précédentes, **caractérisé en ce que** le blindage magnétique (54) comporte une ouverture (60) pour le passage de conducteurs électriques (42) entre la tête de lecture (36) et un dispositif électrique (40) de l'ensemble capteur (34), positionné à l'extérieur du blindage magnétique (54), l'une des caractéristiques suivantes étant de préférence réalisées :
- l'ouverture (60) est positionnée dans une paroi cylindrique (56) du blindage magnétique (54) ;
- l'ouverture (60) est positionnée dans une paroi transversale (58) du blindage magnétique (54).

## Patentansprüche

1. Instrumentiertes Lager (10), umfassend:
- einen feststehenden Außenring (16), der mindestens eine ringförmige Führungsbahn (18) bildet,
- einen Innenring (20), der mindestens eine ringförmige Führungsbahn (22) bildet, die der Führungsbahn (18) des Außenrings gegenüberliegt, wobei der Innenring relativ zum Außenring um eine Rotationsachse drehbar ist, die eine Rotationssymmetrieachse der Führungsbahn des Außenrings und der Führungsbahn (22) des Innenrings (20) ist,
- einen ringförmigen Codierer (30), der an dem Innenring (20) befestigt ist,
- eine Sensoranordnung (34), die an dem Außenring (16) befestigt ist, wobei die Sensoranordnung (34) einen Lesekopf (36) umfasst, der gegenüber und in einem Leseabstand von dem Codierer (30) positioniert ist, und
- einen Leckstromkollektor (44), der dazu ausgelegt ist, in Gleitkontakt mit einem ringförmigen Kontakt (46) zu kommen, der dazu ausgelegt ist, direkt oder indirekt am Innenring (20) befestigt zu werden, und
- eine leitfähige elektrische Verbindung (54) zwischen dem Leckstromkollektor (44) und dem feststehenden Außenring (16),
**dadurch gekennzeichnet, dass** der Codierer (30) und der Lesekopf (36) axial zwischen dem Außenring (16) und dem Leckstromkollektor (44) positioniert sind und die leitfähige elektrische Verbindung (54) eine magnetische Abschirmung aus einem ferromagnetischen Material bildet, die sich vom Außenring (16) bis zum Leckstromkollektor (44) erstreckt und dabei den Codierer (30) und den Lesekopf (36) umgibt.

2. Instrumentiertes Lager (10) nach Anspruch 1, **dadurch gekennzeichnet, dass** der Leckstromkollektor (44) eine Bürste umfasst, die an dem ringförmigen Kontakt (46) reibt.

3. Instrumentiertes Lager (10) nach einem der vorhergehenden Ansprüche, **dadurch gekennzeichnet, dass** der Leckstromkollektor (44) im Ruhezustand über einen Winkelsektor von mehr als 270° mit dem ringförmigen Kontakt (46) in Kontakt steht.

4. Instrumentiertes Lager (10) nach Anspruch 3, **dadurch gekennzeichnet, dass** der Leckstromkollektor (44) im Ruhezustand in ringförmigem Kontakt mit dem Ringkontakt (46) steht.

5. Instrumentiertes Lager (10) nach einem der vorhergehenden Ansprüche, **dadurch gekennzeichnet, dass** der ringförmige Kontakt (46) durch eine ringförmige Hülse (48) gebildet ist, die eines oder mehrere der folgenden Merkmale aufweist:
- die Hülse (48) erstreckt sich in axialer Richtung derart, dass sie axial eine Fläche des Codierers (30) überlappt, die dem Lesekopf (36) zugewandt ist;
- die Hülse (48) erstreckt sich in axialer Richtung derart, dass sie axial den Lesekopf (36) überlappt;
- die Hülse (48) liegt direkt oder indirekt am Innenring (20) an;
- die Hülse (48) ist elektrisch mit dem Innenring (20) verbunden;
- die Hülse (48) ist elektrisch mit der Welle (12) verbunden;
- die Hülse (48) umfasst eine zylindrische Reibfläche (46) für den Leckstromkollektor (44);
- die Hülse (48) umfasst einen radial nach außen vorstehenden Flansch (62), wobei der Leckstromkollektor (44) axial zwischen dem Flansch (62) und dem Lesekopf (36) angeordnet ist.

6. Instrumentiertes Lager (10) nach einem der vorhergehenden Ansprüche, **dadurch gekennzeichnet, dass** die magnetische Abschirmung (54) eine oder mehrere der folgenden Merkmale aufweist:
- die magnetische Abschirmung (54) umfasst mindestens ein Blech (54, 54A, 54B) aus ferromagnetischem und elektrisch leitfähigem Material;
- die magnetische Abschirmung (54) umfasst mehrere übereinanderliegende Bleche (54A, 54B) aus ferromagnetischem und elektrisch leitfähigem Material;
- die magnetische Abschirmung (54) umfasst einen zylindrischen Abschnitt (56), der den Lesekopf (36) bedeckt;
- die magnetische Abschirmung (54) umfasst einen Endabschnitt (58), der sich radial von einem Ende des zylindrischen Abschnitts (56), der den Lesekopf (36) bedeckt, radial nach innen und zu dem Leckstromkollektor (44) erstreckt.

7. Instrumentiertes Lager (10) nach einem der vorhergehenden Ansprüche, **dadurch gekennzeichnet, dass** ein Teil des Leckstromkollektors (44) zwischen zwei Blechen (54A, 54B, 58A, 58B, 58C) der magnetischen Abschirmung (54) eingeklemmt ist.

8. Instrumentiertes Lager nach Anspruch 7, **dadurch gekennzeichnet, dass** sich ein erstes (54A) der zwei Bleche axial erstreckt, um einen zylindrischen Abschnitt zu bilden, der den Lesekopf (36) bedeckt, wobei das zweite (54B, 58B, 58C) der zwei Bleche vorzugsweise eine der folgenden Merkmale aufweist:
- das zweite (58B, 58C) der zwei Bleche erstreckt sich nicht axial, um einen zylindrischen Abschnitt zu bilden, der den Lesekopf (36) bedeckt;
- das zweite (54B) der zwei Bleche erstreckt sich axial, um einen zylindrischen Abschnitt zu bilden, der den Lesekopf (36) bedeckt;
- die zweite (54B, 58B) der zwei Bleche ist zwischen dem ersten (54A) der zwei Bleche und dem Lesekopf (36) positioniert;
- das erste (54A) der zwei Bleche ist zwischen dem zweiten (58C) der zwei Bleche und dem Lesekopf (36) positioniert.

9. Instrumentiertes Lager (10) nach einem der vorhergehenden Ansprüche, **dadurch gekennzeichnet, dass** die magnetische Abschirmung (54) auf den Außenring gecrimpt, geschrumpft, geklebt, geschweißt ist.

10. Instrumentiertes Lager (10) nach einem der vorhergehenden Ansprüche, **dadurch gekennzeichnet, dass** die Sensoranordnung (34) über die magnetische Abschirmung (54) am Außenring (16) befestigt ist.

11. Instrumentiertes Lager (10) nach einem der vorhergehenden Ansprüche, **dadurch gekennzeichnet, dass** die magnetische Abschirmung (54) eine Öffnung (60) zum Hindurchführen von elektrischen Leitern (42) zwischen dem Lesekopf (36) und einer elektrischen Vorrichtung (40) der Sensoranordnung (34) umfasst, die außerhalb der magnetischen Abschirmung (54) positioniert ist, wobei vorzugsweise eines der folgenden Merkmale umgesetzt ist:
- die Öffnung (60) ist in einer zylindrischen Wand (56) der magnetischen Abschirmung (54) positioniert;
- die Öffnung (60) ist in einer Querwand (58) der magnetischen Abschirmung (54) positioniert.

## Claims

1. Instrumented bearing (10), comprising:
- a fixed outer ring (16) that forms at least one annular guide track (18),
- an inner ring (20) that forms at least one annular guide track (22) located opposite the guide track (18) of the outer ring, the inner ring being rotatable relative to the outer ring about an axis of rotation which is an axis of rotational symmetry of the guide track of the outer ring and of the guide track (22) of the inner ring (20),
- an annular encoder (30) secured to the inner ring (20),
- a sensor assembly (34) secured to the outer ring (16), the sensor assembly (34) comprising a reading head (36) positioned opposite and at a reading distance from the encoder (30), and
- a leakage current collector (44) capable of coming into sliding contact with an annular contact (46) capable of being secured directly or indirectly to the inner ring (20), and
- a conductive electrical connection (54) between the leakage current collector (44) and the fixed outer ring (16),
**characterized in that** the encoder (30) and the reading head (36) are positioned axially between the outer ring (16) and the leakage current collector (44), and the conductive electrical connection (54) forms a magnetic shield made of a ferromagnetic material extending from the outer ring (16) to the leakage current collector (44) and surrounding the encoder (30) and the reading head (36).

2. Instrumented bearing (10) according to claim 1, **characterized in that** the leakage current collector (44) comprises a brush that rubs against the annular contact (46).

3. Instrumented bearing (10) according to either of the preceding claims, **characterized in that**, when idle, the leakage current collector (44) is in contact with the annular contact (46) over an angular sector greater than 270°.

4. Instrumented bearing (10) according to claim 3, **characterized in that**, when idle, the leakage current collector (44) is in annular contact with the annular contact (46).

5. Instrumented bearing (10) according to any of the preceding claims, **characterized in that** the annular contact (46) is formed by an annular sleeve (48) which has one or more of the following characteristics:
- the sleeve (48) extends axially so as to overlap axially with a face of the encoder (30) that faces the reading head (36);
- the sleeve (48) extends axially so as to overlap axially with the reading head (36);
- the sleeve (48) bears directly or indirectly against the inner ring (20);
- the sleeve (48) is electrically connected to the inner ring (20);
- the sleeve (48) is electrically connected to the shaft (12);
- the sleeve (48) has a cylindrical friction surface (46) for the leakage current collector (44);
- the sleeve (48) has a flange (62) that projects radially outwards, the leakage current collector (44) being positioned axially between the flange (62) and the reading head (36).

6. Instrumented bearing (10) according to any of the preceding claims, **characterized in that** the magnetic shield (54) has one or more of the following characteristics:
- the magnetic shield (54) comprises at least one sheet (54, 54A, 54B) made of electrically conductive ferromagnetic material;
- the magnetic shield (54) comprises a plurality of stacked sheets (54A, 54B) made of electrically conductive ferromagnetic material;
- the magnetic shield (54) comprises a cylindrical portion (56) that covers the reading head (36);
- the magnetic shield (54) comprises an end portion (58) which extends radially inward from an end of the cylindrical portion (56) that covers the reading head (36) toward the leakage current collector (44).

7. Instrumented bearing (10) according to any of the preceding claims, **characterized in that** part of the leakage current collector (44) is gripped between two sheets (54A, 54B, 58A, 58B, 58C) of the magnetic shield (54).

8. Instrumented bearing according to claim 7, **characterized in that** a first (54A) of the two sheets extends axially so as to form a cylindrical portion that covers the reading head (36), the second (54B, 58B, 58C) of the two sheets preferably having one of the following characteristics:
- the second (58B, 58C) of the two sheets does not extend axially so as to form a cylindrical portion that covers the reading head (36);
- the second (54B) of the two sheets extends axially so as to form a cylindrical portion that covers the reading head (36);
- the second (54B, 58B) of the two sheets is positioned between the first (54A) of the two sheets and the reading head (36);
- the first (54A) of the two sheets is positioned between the second (58C) of the two sheets and the reading head (36).

9. Instrumented bearing (10) according to any of the preceding claims, **characterized in that** the magnetic shield (54) is crimped, shrunk, glued, or welded onto the outer ring.

10. Instrumented bearing (10) according to any of the preceding claims, **characterized in that** the sensor assembly (34) is secured to the outer ring (16) via the magnetic shield (54).

11. Instrumented bearing (10) according to any of the preceding claims, **characterized in that** the magnetic shield (54) comprises an opening (60) through which electrical conductors (42) are to pass between the reading head (36) and an electrical device (40) of the sensor assembly (34) positioned outside the magnetic shield (54), one of the following features preferably being provided:
- the opening (60) is positioned in a cylindrical wall (56) of the magnetic shield (54);
- the opening (60) is positioned in a transverse wall (58) of the magnetic shield (54).
